# EUROPÄISCHE PATENTSCHRIFT

(11) **EP 2 371 639 B1**
(45) Veröffentlichungstag und Bekanntmachung des Hinweises auf die Patenterteilung: **16.12.2015**
(21) Anmeldenummer: 11001727.4
(22) Anmeldetag: 02.03.2011
(51) Int. Cl.: B60T 13/22, B60T 13/68

(54) **Bremssteuerungssystem einer mobilen Arbeitsmaschine, insbesondere Flurföderzeug**
Brake control system of a mobile work machine, in particular industrial truck
Système de commande de freinage d'une machine de travail mobile, notamment chariot élévateur

(30) Priorität: 26.03.2010 DE 102010012886
(43) Veröffentlichungstag der Anmeldung: 05.10.2011
(73) Patentinhaber: STILL GmbH, 22113 Hamburg (DE)
(72) Erfinder: Schwab, Markus, 23879 Mölln (DE)
(74) Vertreter: Geirhos, Johann

(56) Entgegenhaltungen:
- DE-A1-102009 031 742
- DE-A1-102009 031 743
- JP-A- S58 126 246
- US-A- 5 611 199

## Beschreibung

Die Erfindung betrifft ein Bremssteuerungssystem einer mobilen Arbeitsmaschine, insbesondere Flurförderzeug, mit einer als Federspeicherbremse ausgebildeten Bremseinrichtung, insbesondere einer als Feststellbremse arbeitenden Bremseinrichtung, die hydraulisch mittels eines in einem Bremslösedruckraum anstehenden Bremslösedruckes in Richtung einer Lösestellung beaufschlagbar ist, wobei zur Steuerung der Bremseinrichtung dem Bremslösedruckraum eine elektrisch betätigbare Bremsventileinrichtung vorgeschaltet ist und mittels der Bremsventileinrichtung eine manuelle und/oder automatische Feststellbremsfunktion sowie eine Sicherheitsfunktion erzielbar ist.

Derartige, als Federspeicherbremsen ausgebildete Bremseinrichtungen, die durch einen Bremslösedruck entgegen der Federkraft eines Federpaketes in die Lösestellung beaufschlagbar sind, werden auch als hydraulisch beaufschlagte negative Federspeicherbremsen bezeichnet. Die Beaufschlagung der Federspeicherbremse in Richtung der Bremsstellung erfolgt durch einen Abbau des Bremslösedruckes, wobei die maximale Bremskraft durch die Federkraft des Federpaketes vorgegeben wird.

Bei mobilen Arbeitsmaschinen, beispielsweise als elektrisch-betriebene oder verbrennungsmotorisch-betriebene Gabelstapler ausgebildeten Flurförderzeugen, werden als Federspeicherbremsen ausgebildete Bremseinrichtungen als Feststellbremse und/oder Betriebsbremse verwendet. Die von der Bedienperson zu bedienenden Betätigungselemente sind hierbei in der Regel von einem Pedal, beispielsweise einem Bremspedal oder einer Doppelpedalanordnung, für die Funktion der Betriebsbremse und einem Betätigungsmittel, beispielsweise einem Handbremshebel, für die Funktion der Feststellbremse gebildet. Beide Betätigungselemente wirken hierbei unabhängig voneinander mechanisch auf einen Aktuator der Federspeicherbremse, beispielsweise einem den Bremslösedruck erzeugenden Bremsventil.

Gattungsgemäße Bremseinrichtungen werden zur Erzielung einer Feststellbremsfunktion und einer Sicherheitsfunktion eingesetzt. Als Feststellbremsfunktion im Sinne dieser Erfindung wird hierbei ein statischer Fall angesehen, bei dem die Bremseinrichtung im Stillstand der Arbeitsmaschine in die Bremsstellung betätigt wird. Der Abbau des Bremslösedruckes soll hierbei schlagartig erfolgen, um ein schnelles Einfallen der Federspeicherbremse in die Bremsstellung zu erzielen. Mit der Sicherheitsfunktion soll bei einem Fehlerfall, beispielsweise einem Stromausfall, einem Abfall oder Abriss des Batteriesteckers bei einem elektrischbetriebenen Arbeitsmaschine, oder bei der Betätigung eines Notausschalters (stromloses Fahrzeug) ein Abbau des Bremslösedruckes auf ein definiertes Niveau oder ein zeitverzögerter Abbau des Bremslösedruckes in dem Bremslösedruckraum erzielt wird, so dass die Arbeitsmaschine mit einem reduzierten Bremsmoment und einer definierten Verzögerung abgebremst wird. Durch ein derartiges kontrolliertes Abbremsen kann bei einer als Flurförderzeug ausgebildeten Arbeitsmaschine ein Abwerfen einer transportierten Last vermieden werden.

Um bei derartigen Federspeicherbremsen eine automatische Feststellbremsfunktion und eine derartige Sicherheitsfunktion zu erzielen, ist bereits bekannt, eine elektrisch betätigbare Bremsventileinrichtung vorzusehen, mittels der ein schlagartiger Abbau des Bremslösedruckes für die Feststellbremsfunktion bzw. ein verzögerter Abbau des Bremslösedruckes für die Sicherheitsfunktion erzielbar ist.

Ein gattungsgemäßes Bremssteuerungssystem für ein Flurförderzeug ist aus der DE 10 2009 031 743 A1. Aus der Figur 4 der DE 10 2009 031 743 A1 ist eine Ausführungsform eines Bremssteuerungssystem bekannt, bei dem die elektrisch betätigbare Bremsventileinrichtung ein elektrisches Feststellbremsventil umfasst, das im stromlosen Zustand die mit dem Bremslösedruckraum in Verbindung stehende Bremslösedruckleitung mit einem elektrisch betätigbaren Proportional-Druckbegrenzungsventil verbindet, das ausgangsseitig an einen Behälter angeschlossen ist. Für die automatische Feststellbremsfunktion wird das Feststellbremsventil stromlos geschalten und das Proportional-Druckbegrenzungsventil in eine Öffnungsstellung angesteuert, so dass durch einen sofortigen Druckabbau des Bremslösedruckes die Federspeicherbremse in die Bremsstellung beaufschlagt wird. Für die Sicherheitsfunktion wird das Feststellbremsventil stromlos geschaltet und das Proportional-Druckbegrenzungsventil nicht angesteuert, so dass durch einen zeitverzögerten Abbau des Bremslösedruckes die Federspeicherbremse mit einem reduzierten Bremsmoment in die Bremsstellung beaufschlagt wird.

Die von dem Feststellbremsventil und dem Proportional-Druckbegrenzungsventil bestehende elektrisch betätigbare Bremsventileinrichtung weist jedoch einen hohen Bauaufwand auf. Zudem können Funktionsbeeinträchtigungen auftreten, falls das Feststellbremsventil nach einer elektrischen Ansteuerung in einer Schaltstellung verklemmen sollte, in der der Bremslösedruckraum mit dem Ausgang eines Bremsventils in Verbindung steht. Bei einem Verklemmen des Feststellbremsventils in dieser Schaltstellung ist die Funktionalität der automatischen Feststellbremsfunktion nicht mehr gegeben.

Aus der Figur 5 der DE 10 2009 031 743 A1 ist eine Ausführungsform eines Bremssteuerungssystem bekannt, bei dem die elektrisch betätigbare Bremsventileinrichtung drei elektrisch betätigbare Schaltventile und ein Druckbegrenzungsventil umfasst, um eine automatische Feststellbremsfunktion und eine Sicherheitsfunktion zu erzielen. Aufgrund der hohen Anzahl von Schaltventilen und dem zusätzlichen Druckbegrenzungsventil weist diese Ausführungsform ebenfalls einen hohen Bauaufwand auf.

Der vorliegenden Erfindung liegt die Aufgabe zugrunde, ein Bremssteuerungssystem der eingangs genannten Gattung zur Verfügung zu stellen, bei dem mit geringem Bauaufwand und einer hohen Funktionssicherheit eine Feststellbremsfunktion und eine Sicherheitsfunktion erzielt werden kann.

Diese Aufgabe wird erfindungsgemäß dadurch gelöst, dass die elektrisch betätigbare Bremsventileinrichtung ein erstes, als Zweistellungsventil ausgebildetes, elektrisch betätigbares Steuerventil umfasst, das in einer den Bremslösedruck führenden Bremslösedruckleitung angeordnet ist und eine im stromlosen Zustand wirksame Sperrstellung sowie eine elektrisch betätigbare Durchflussstellung aufweist, und ein zweites, als Zweistellungsventil ausgebildetes, elektrisch betätigbares Steuerventil umfasst, das in einer von der Bremslösedruckleitung zwischen dem ersten Steuerventil und dem Bremslösedruckraum abzweigenden, zu einem Behälter geführten Behälterzweigleitung angeordnet ist und eine im stromlosen Zustand wirksame Sperrstellung sowie eine elektrisch betätigbare Durchflussstellung aufweist, wobei das erste Steuerventil im stromlosen Zustand den Bremslösedruckraum mit einer Druckabbau- oder Druckhalteeinrichtung oder mit dem Behälter verbindet. Eine derartige Bremsventileinrichtung, die von lediglich zwei elektrisch betätigbaren Zweistellungsventilen gebildet ist, weist einen geringen Bauaufwand auf. Durch die Anordnung des zweiten Steuerventils in einer Behälterzweigleitung, die von der Bremslösedruckleitung zwischen dem ersten Steuerventil und dem Bremslösedruckraum der Federspeicherbremse abzweigt, ergibt sich eine parallele Anordnung und Schaltung der beiden Steuerventile der Bremsventileinrichtung. Durch die Verbindung des Bremslösedruckraumes mit der Druckabbau- oder Druckhalteeinrichtung bzw. dem Behälter in der stromlosen Stellung des ersten Ventils wird die Sicherheitsfunktion mit geringem Bauaufwand und ohne zusätzliche weitere Ventile erzielt. Darüber hinaus ergibt sich eine hohe Funktionssicherheit der Bremsventileinrichtung, da neben dem zweiten Steuerventil ebenfalls das erste Steuerventil im stromlosen Zustand eine Verbindung des Bremslösedruckraumes mit dem Behälter bzw. der Druckabbau- oder Druckhalteeinrichtung ermöglicht und somit ein Abbremsen der Arbeitsmaschine durch die als Federspeicherbremse ausgebildete Bremseinrichtung ermöglicht. Hierdurch kann bei dem Ausfall eines der beiden Steuerventile die Arbeitsmaschine durch das jeweils andere Steuerventil sicher abgebremst werden. Beispielsweise kann durch das zweite Steuerventil auch bei einem Ausfall oder einem Verklemmen des ersten Steuerventils in der Durchflussstellung bzw. durch das erste Steuerventil bei einem Ausfall oder Verklemmen des zweiten Steuerventils in der Sperrstellung ein Abbau des Bremslösedruckes und somit eine Beaufschlagung der Federspeicherbremse in die Bremsstellung erzielt werden und somit die Feststellbremsfunktion ermöglicht und erhalten bleiben. Mit der erfindungsgemäßen Bremsventileinrichtung, die lediglich zwei einfach aufgebaute Zweistellungsventile umfasst, kann somit bei einer hydraulisch lösbaren Federspeicherbremse die Feststellbremsfunktion und die Sicherheitsfunktion mit einem geringen Bauaufwand und einer hohen Funktionssicherheit erzielt werden.

Die manuelle und/oder automatische Feststellbremsfunktion kann hierbei auf einfache Weise erzielt werden, wenn das erste Steuerventil durch eine Stromlosschaltung in die Sperrstellung beaufschlagt und das zweite Steuerventil durch eine elektrische Ansteuerung in die Durchflussstellung beaufschlagt ist. Das erste Steuerventil sperrt in der Sperrstellung die Bremslösedruckleitung von einer Druckversorgung ab, so dass durch eine Ansteuerung des zweiten Steuerventils und einer Betätigung des zweiten Steuerventils in die Durchflussstellung der in dem Bremslösedruckraum anstehende Bremslösedruck schlagartig zum Behälter abbaubar ist, um ein schlagartiges und sofortiges Einfallen der Federspeicherbremse in die Bremsstellung zu erzielen.

Die Sicherheitsfunktion kann gemäß einer vorteilhaften Ausführungsform der Erfindung mit geringem Bauaufwand erzielt werden, wenn das erste Steuerventil im stromlosen Zustand die Behälterzweigleitung oder die Bremslösedruckleitung zwischen dem ersten Steuerventil und dem Bremslösedruckraum mit der Druckabbau- oder Druckhalteeinrichtung bzw. dem Behälter verbindet. Durch die Verbindung der Behälterzweigleitung bzw. der Bremslösedruckleitung zwischen dem ersten Steuerventil und dem Bremslösedruckraum mit der Druckabbau- oder Druckhalteeinrichtung bzw. dem Behälter kann im stromlosen Zustand des ersten Steuerventils mit geringem Bauaufwand erzielt werden, dass der Bremslösedruckraum mit der Druckabbau- oder Druckhalteeinrichtung in Verbindung steht, so dass ein Abbau des Bremslösedruckes auf ein definiertes Niveau oder ein zeitverzögerter Abbau des Bremslösedruckes in dem Bremslösedruckraum erzielt wird, um die Arbeitsmaschine in der Sicherheitsfunktion mit einem reduzierten Bremsmoment abzubremsen.

Gemäß einer vorteilhaften Ausgestaltungsform der Erfindung ist die Druckabbau- oder Druckhalteeinrichtung von einer in das erste Steuerventil integrierten Drosseleinrichtung, insbesondere einer Blende, gebildet, wobei das erste Steuerventil im stromlosen Zustand die Behälterzweigleitung oder die Bremslösedruckleitung zwischen dem ersten Steuerventil und dem Bremslösedruckraum über die Drosseleinrichtung mit dem Behälter verbindet. Mit einer derartigen Drosseleinrichtung, die von einer entsprechenden Steuerkante des Steuerventils gebildet werden kann, kann mit geringem Bauaufwand im stromlosen Zustand des ersten Steuerventils ein zeitverzögerter Abbau des Bremslösedruckes in dem Bremslösedruckraum erzielt werden, um zur Erzielung der Sicherheitsfunktion ein Abbremsen der Arbeitsmaschine mit einem reduzierten Bremsmoment zu erzielen.

Zweckmäßigerweise sperrt das erste Steuerventil in der Durchflussstellung die Verbindung des Bremslösedruckraumes zum Behälter ab. Die Durchflussstellung des ersten Steuerventils bildet eine Schaltstellung zum Lösen der Federspeicherbremse. Durch die Absperrung der Verbindung des Bremslösedruckraumes zum Behälter in dieser Schaltstellung wird ein hydraulischer Kurzschluss auf einfache Weise vermieden, um eine sichere Beaufschlagung der Federspeicherbremse in die Lösestellung zu erzielen.

Besondere Vorteile ergeben sich, wenn bei dem erfindungsgemäßen Bremssteuerungssystem gemäß einer bevorzugten Weiterbildung der Erfindung zur Betätigung der elektrisch betätigbaren Bremsventileinrichtung eine elektronische Steuereinrichtung vorgesehen ist.

Sofern die elektronische Steuereinrichtung eingangsseitig mit einer Sensoreinrichtung, insbesondere einem Geschwindigkeitssensor oder einem das Vorhandensein einer Bedienperson erfassenden Sensoreinrichtung, beispielsweise einem Sitzbelegungsschalter, in Wirkverbindung steht, ist auf einfache Weise in Abhängigkeit des Signals der Sensoreinrichtung die automatische Feststellbremsfunktion durch entsprechende Ansteuerung der beiden Steuerventile erzielbar. Mit der Funktion einer automatischen Feststellbremse kann eine Fahrerunterstützung auf einfache Weise erzielt werden, indem beispielsweise bei einer stehenden Arbeitsmaschine oder einem Verlassen des Fahrerarbeitsplatzes die Federspeicherbremse automatisch in die Bremsstellung beaufschlagt wird. Zudem kann hierdurch im Start-Stopp-Betrieb der mobilen Arbeitsmaschine die Funktion einer automatischen Feststellbremse realisiert werden, um eine ungewollte Bewegung des stehenden Fahrzeugs zu vermeiden. Bei dem Bremssteuerungssystem mit den beiden elektrischen betätigten Steuerventilen kann eine automatische Feststellbremse auf einfache Weise erzielt werden.

Zweckmäßigerweise steht die elektronische Steuereinrichtung eingangsseitig mit einem Bedienelement, insbesondere einem Taster oder Schalter, in Wirkverbindung, wobei in Abhängigkeit der Betätigung des Bedienelements die manuelle Feststellbremsfunktion erzielbar ist. Durch Betätigen des Bedienelements und entsprechende Ansteuerung der beiden Steuerventile durch die elektronische Steuereinrichtung kann ebenfalls die Funktion einer manuellen Feststellbremse auf einfache Weise erzielt werden.

Gemäß einer zweckmäßigen Weiterbildung der Erfindung arbeitet die Federspeicherbremse zusätzlich als Betriebsbremse, wobei dem Bremslösedruckraum ein Bremsventil zugeordnet ist. Bei einer Betätigung des Bremsventils kann durch einen kontrollierten Abbau des in dem Bremslösedruckraum anstehenden Bremslösedruckes mit geringem zusätzlichen Bauaufwand die Federspeicherbremse um die Funktion einer Betriebsbremse erweitert werden. Das erste Steuerventil ist hierbei bevorzugt in der von dem Bremsventil zu dem Bremslösedruckraum geführten Bremslösedruckleitung und somit stromab des Bremsventils in der Bremslösedruckleitung angeordnet.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform der Erfindung mit einer als Feststellbremse ausgebildeten Bremseinrichtung,
- Figur 2: eine zweite Ausführungsform der Erfindung mit einer als Feststellbremse und Betriebsbremse ausgebildeten Bremseinrichtung und
- Figur 3: eine Ausgestaltungsform der Erfindung.

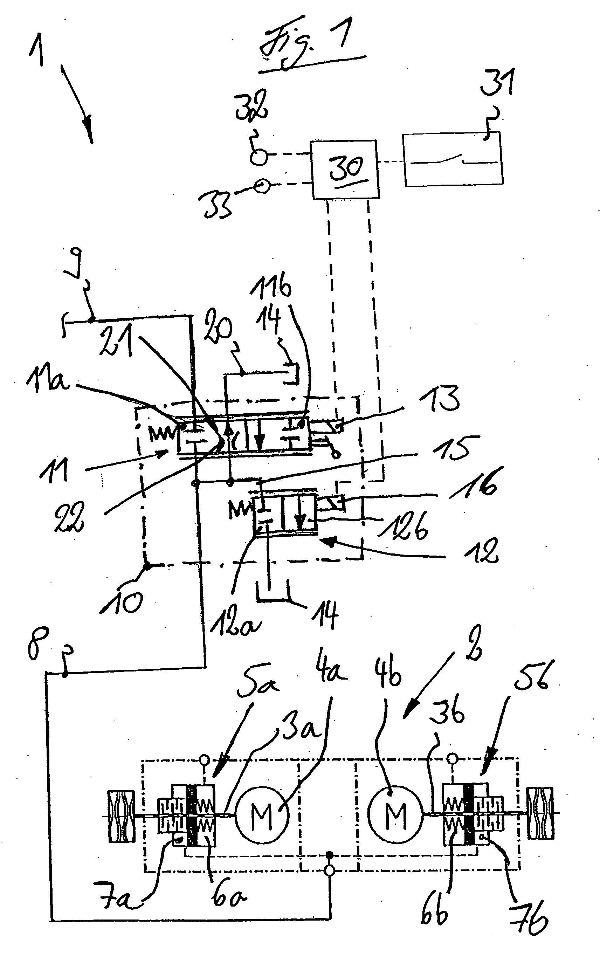

In der Figur 1 ist ein Bremssteuerungssystem 1 einer Arbeitsmaschine, beispielsweise eines batterie-elektrisch oder verbrennungsmotorisch betriebenen, bevorzugt als Gabelstapler ausgebildeten Flurförderzeugs, mit einer als Federspeicherbremse ausgebildeten Bremseinrichtung 2 beschrieben, die eine Feststellbremse bildet. Gezeigt ist eine Antriebsachse mit zwei angetrieben Rädern, die über zwei Antriebswellen 3a und 3b verfügt, die jeweils von einem Fahrmotor 4a bzw. 4b antreibbar sind. Die Antriebswellen 3a, 3b sind durch jeweils eine Bremseinrichtung abbremsbar und arretierbar, die als hydraulisch lösbare Federspeicherbremse 5a bzw. 5b ausgebildet ist. Bevorzugt sind die Federspeicherbremsen 5a, 5b als ölgekühlte Lamellenbremsen ausgebildet.

Anstelle der dargestellten Antriebsachse mit zwei Fahrmotoren ist ebenfalls möglich, zum Antrieb der beiden Räder einen einzigen Fahrmotor vorzusehen, der über ein Differentialgetriebe mit den Antriebswellen 3a, 3b in trieblicher Verbindung steht.

Die Federspeicherbremsen 5a, 5b sind jeweils von einer Federeinrichtung 6a, 6b in eine die Bremsstellung bildende Schließstellung beaufschlagt, wobei die Kraft der Federeinrichtung eine maximale Bremskraft und somit eine maximale Verzögerung definiert. Zum Lösen der Federspeicherbremsen 5a, 5b ist jeweils ein Bremslösedruckraum 7a bzw. 7b vorgesehen, der bei einer Druckbeaufschlagung mit einem Bremslösedruck der Kraft der Federeinrichtung 6a, 6b entgegenwirkt, um die Federspeicherbremse 5a, 5b in eine Lösestellung zu beaufschlagen. Die Bremslösedruckräume 7a, 7b sind mit einer gemeinsamen hydraulischen Bremslösedruckleitung 8 verbunden, die an eine Druckversorgungsleitung 9 einer nicht mehr näher dargestellten Druckversorgungseinrichtung anschließbar ist.

Zur Steuerung der Federspeicherbremse 6a, 6b ist den Bremslösedruckräumen 7a, 7b eine elektrisch betätigbare Bremsventileinrichtung 10 vorgeschaltet.

Die erfindungsgemäße Bremsventileinrichtung 10 umfasst zwei elektrisch betätigbare Steuerventile 11, 12, die jeweils als Zweitstellungsventile ausgebildet sind.

Das erste Steuerventil 11 ist in der Bremsleitung 8 angeordnet und steht eingangsseitig mit der Druckversorgungsleitung 9 und ausgangsseitig mit der Bremslösedruckleitung 8 in Verbindung. Das erste Steuerventil 11 weist eine Sperrstellung 11a und eine als Druckaufbaustellung zum Lösen der Federspeicherbremse 5a, 5b ausgebildete Durchflussstellung 11 b auf, wobei in der Sperrstellung 11a die Verbindung der Druckversorgungsleitung 9 mit der Bremslösedruckleitung 8 abgesperrt und in der Durchflussstellung 11 b die Bremslösedruckleitung 8 mit der Druckversorgungsleitung 9 verbunden ist. Das Steuerventil 11 ist von einer Feder in die Sperrstellung 11a beaufschlagt und durch eine elektrische Betätigungseinrichtung 13, beispielsweise einen Schaltmagneten, in die Durchflussstellung 11 b beaufschlagbar. Das Steuerventil 11 befindet sich somit im stromlosen Zustand in der Sperrstellung 11a. Bei einer elektrischen Ansteuerung wird das Steuerventil 11 in die Durchflussstellung 11 b betätigt, in der die Bremslösedruckräume 7a, 7b mit der Druckversorgungsleitung 9 verbunden sind.

Von der Bremslösedruckleitung 8 zweigt zwischen dem ersten Steuerventil 11 und den Bremslösedruckräumen 7a, 7b eine zu einem Behälter 14 geführte Behälterzweigleitung 15 ab, in der das zweite Steuerventil 12 angeordnet ist. Das zweite Steuerventil 12 weist eine Sperrstellung 12a, in der die Behälterzweigleitung 15 abgesperrt ist, und eine als Drucklosstellung für die Feststellbremsfunktion ausgebildeten Durchflussstellung 12b auf, in der die Behälterzweigleitung 15 geöffnet und somit die Bremslüftdruckräume 7a, 7b mit dem Behälter 14 verbunden sind. In der Behälterzweigleitung 15 und somit der Verbindung des Bremslösedruckraumes 7a, 7b mit dem Behälter 14 sind zusätzlich zu dem Steuerventil 12 keine weiteren drosselnden Ventileinrichtungen angeordnet. Das Steuerventil 12 ist von einer Feder in die Sperrstellung 12a beaufschlagt und durch eine elektrische Betätigungseinrichtung 16, beispielsweise einen Schaltmagneten, in die Durchflussstellung 12b beaufschlagbar. Das Steuerventil 12 befindet sich somit im stromlosen Zustand in der Sperrstellung 12a. Bei einer elektrischen Ansteuerung wird das Steuerventil 12 in die Durchflussstellung 12b betätigt, in der die Bremslösedruckräume 7a, 7b über die Behälterzweigleitung 15 direkt und ohne Zwischenschaltung weiterer Ventileinrichtungen mit dem Behälter 14 verbunden sind.

Das erste Steuerventil 11 steuert weiterhin in einer redundanten Weise die Verbindung der Bremslösedruckräume 7a, 7b mit dem Behälter 14. Das Steuerventil 11 weist hierzu einen zweiten Steuerpfad auf, der die Verbindung der Bremslösedruckräume 7a, 7b mit dem Behälter 14 steuert und im vorliegenden Ausführungsbeispiel von einer Steuerleitung 20 gebildet ist. Die Steuerleitung 20 ist hierbei an die Behälterzweigleitung 15 bzw. die Bremslösedruckleitung 8 zwischen dem ersten Steuerventil 11 und dem Bremslösedruckraum 7a, 7b angeschlossen und zu dem Behälter 14 geführt. In der Steuerleitung 20 ist eine Druckabbau- bzw. Druckhalteeinrichtung 21 angeordnet, die bevorzugt von einer in das erste Steuerventil 11 integrierten Drosseleinrichtung 22, beispielsweise einer Blende im zweiten Steuerpfad, gebildet ist. In der Sperrstellung 11a des ersten Steuerventils 11 und somit im stromlosen Zustand des ersten Steuerventils 11, in der die Verbindung des Bremslösedruckleitung 8 mit der Druckversorgungsleitung 9 abgesperrt ist, ist hierbei der zweite Steuerpfad und somit die Steuerleitung 20 geöffnet, so dass die Bremslösedruckräume 7a, 7b über die Druckabbau- bzw. Druckhalteeinrichtung 21 mit dem Behälter 14 verbunden sind. Die Sperrstellung 11a des ersten Steuerventils 11 bildet hierbei über den zweiten Steuerpfad eine Druckabbaustellung zur Erzielung einer Sicherheitsfunktion. In der Durchflussstellung 11 b des ersten Steuerventils 11 ist der zweite Steuerpfad und somit die Steuerleitung 20 abgesperrt.

Die beiden Steuerventile 11, 12 der Bremsventileinrichtung 10 sind mittels einer elektronischen Steuereinrichtung 30 betätigbar, die eingangsseitig mit einem als Schalter oder Taster ausgebildeten Betätigungsmittel als Bedienelement 31 in Verbindung steht. Durch Betätigen des Bedienelements 31 kann hierbei von der elektronischen Steuereinrichtung 30 durch entsprechende Ansteuerung der beiden Steuerventile 11, 12 eine manuelle Feststellbremsfunktion erzielt werden.

Zudem steht eingangsseitig mit der Steuereinrichtung 30 mindestens eine Sensoreinrichtung in Verbindung, beispielsweise ein das Vorhandensein der Bedienperson auf einem Fahrerarbeitsplatz, beispielsweise einem Fahrersitz, erfassender Sitzbelegungsschalter 32 oder ein die Fahrzeuggeschwindigkeit erfassender Sensor 33. Bei stehender Arbeitsmaschine oder einer den Fahrersitz verlassenden Bedienperson kann in Abhängigkeit von den Signalen der Sensoreinrichtungen eine automatisierte Betätigung der Federspeicherbremse 5a, 5b im Sinne einer automatisch aktivierten Feststellbremse erzielt werden.

Zum Lösen der Feststellbremse 5a, 5b ist das zweite Steuerventil 12 unbestromt und befindet sich in der Sperrstellung 12a, in der die Verbindung der Bremslösedruckräume 7a, 7b zum Behälter 14 unterbrochen und abgesperrt ist. Durch Bestromen des ersten Steuerventil 11 wird das erste Steuerventil 11 in die Durchflussstellung 11 b beaufschlagt, in der die Bremslösedruckleitung 8 mit der Druckversorgungsleitung 9 verbunden ist. Die Durchflussstellung 11 b des ersten Steuerventils 11 bildet somit eine Druckaufbaustellung zum Lösen der Federspeicherbremse 5a, 5b, so dass die Bremslösedruckräume 7a, 7b durch einen Bremslösedruck hydraulisch beaufschlagt und dadurch eine der Federkraft der Federeinrichtungen 6a, 6b entgegengesetzte Kraft erzeugt werden kann, wodurch die Federspeicherbremsen 5a, 5b in die Lösestellung beaufschlagt und somit gelöst werden, was einer geöffneten Feststellbremse entspricht. In der Durchflussstellung 11 b des ersten Steuerventils 11 ist der zweite Steuerpfad mit der Steuerleitung 20 abgesperrt, so dass der Behälterausgang des ersten Steuerventils 11 verschlossen ist. Der zum Lösen der Federspeicherbremse 5a, 5b erforderliche Bremslösedruck wird somit über die Druckversorgungsleitung 9 zur Verfügung gestellt.

Die als Feststellbremse arbeitende Federspeicherbremse 5a, 5b kann im Sinne einer automatischen Feststellbremse bei entsprechenden Signalen der Sensoreinrichtungen 32 bzw. 33 oder im Sinne einer manuellen Feststellbremse bei einer Betätigung des Bedienelements 31 in die Bremsstellung beaufschlagt und somit geschlossen werden, wenn das erste Steuerventil 11 nicht mehr bestromt und somit stromlos geschaltet wird und das zweite Steuerventil 12 bestromt wird. Das erste Steuerventil 11 wird somit in die Sperrstellung 11a beaufschlagt, in der die Verbindung der Druckversorgungsleitung 9 mit der Bremslösedruckleitung 8 und somit die Druckversorgung der Federspeicherbremse 5a, 5b abgesperrt ist und der zweite, von der Steuerleitung 20 gebildete Signalpfad geöffnet ist. Das zweite Steuerventil 12 sorgt im angesteuerten Zustand in der als Drucklosstellung ausgebildeten Durchflussstellung 12b für einen sofortigen und schlagartigen Druckabbau des Bremslösedruckes in den Bremslösedruckräumen 7a, 7b der Federspeicherbremsen 5a, 5b, so dass die Federeinrichtung 6a, 6b die Federspeicherbremse 5a, 5b in die Bremsstellung beaufschlagt und die Feststellbremse schließt. Die Arbeitsmaschine wird somit mit der maximalen Bremskraft, die durch die Federeinrichtungen 6a, 6b definiert werden, abgebremst und im Stillstand gehalten.

Kommt es bei fahrender Arbeitsmaschine zu einem Stromausfall, beispielsweise infolge eines sich lösenden Batteriesteckers oder einer leeren Traktionsbatterie bzw. durch Betätigen eines Notausschalters (stromloses Fahrzeug), so sind beide Steuerventile 11, 12 unbestromt. Das erste Steuerventil 11 und das zweite Steuerventil 12 schalten somit jeweils in die Sperrstellung 11a bzw. 12a. Das erste Steuerventil 11 gibt hierbei in der Sperrstellung 11a den zweiten Signalpfad, der von der Steuerleitung 20 gebildet wird, frei und ermöglicht eine Druckabbaustellung, in der die Bremslüftdruckräume 7a, 7b über die Druckabbau- bzw. Druckhalteeinrichtung 21 mit dem Behälter 14 verbunden sind. Durch die Druckabbau- bzw. Druckhalteeinrichtung 21 wird ein Druckabbau des Bremslösedruckes auf ein definiertes Niveau bzw. ein zeitverzögerter Druckabbau des Bremslösedruckes in dem Bremslösedruckraum 7a bzw. 7b der Federspeicherbremsen 5a, 5b erzielt, so dass diese zunächst mit einem reduzierten Bremsmoment schließen und die fahrende Arbeitsmaschine gemäß einer hydraulischen Rampe mit einer definierten Verzögerung abgebremst wird. Durch dieses reduzierte Bremsmoment bzw. Abbremsen gemäß einer hydraulischen Rampe kann in dieser Sicherheitsfunktion bei einer als Flurförderzeug ausgebildeten Arbeitsmaschine bei einer Abbremsung infolge eines stromlosen Fahrzeugs ein Lastabwurf der transportierten Last vermieden werden. Bei vollständig abgebautem Bremslösedruck wird die Arbeitsmaschine mit der von der Federeinrichtung 6a, 6b vorgegebenen maximalen Bremskraft abgebremst bzw. im Stillstand gehalten.

In der Sperrstellung 11a sperrt das erste Steuerventil 11 die Verbindung der Bremslösedruckleitung 8 mit der Druckversorgungsleitung 9 ab. Hierdurch wird sichergestellt, dass sich kein Staudruck zwischen dem Bremslösedruckraum 7a, 7b und der Druckabbau- bzw. Druckhalteeinrichtung 21 aufbauen kann, der eine Verringerung der Bremskraft in der Sicherheitsfunktion zur Folge hätte.

Bei der erfindungsgemäßen Bremsventileinrichtung 10 wird durch den zweiten Signalpfad des ersten Steuerventils 11 neben der Behälterverbindung der Bremslüftdruckräume 7a, 7b über das zweite Steuerventil 12 eine zusätzliche, redundante Behälterverbindung der Bremslüftdruckräume 7a, 7b erzielt. Mit dem zweiten Signalpfad und der zusätzlichen Behälterverbindung des ersten Steuerventils 11 kann neben der Erzielung der Sicherheitsfunktion weiterhin die Funktionssicherheit der Feststellbremseinrichtung 5a, 5b erhöht werden. Durch die beiden Behälterverbindungen der Steuerventile 11, 12 wird hierbei erzielt, dass die Arbeitsmaschine bei einem Ausfall des zweiten Steuerventils 12 über den zweiten Signalpfad des ersten Steuerventils 11 abgebremst werden kann bzw. die Arbeitsmaschine bei einem Ausfall des ersten Steuerventils 11 über das zweite Steuerventil 12 abgebremst werden kann. Sofern eines der beiden Steuerventile 11 bzw. 12 ausfallen sollte, kann somit aufgrund der jeweiligen Behälterverbindungen in dem entsprechenden Steuerventil 11, 12 die Federspeicherbremse 5a, 5b über das noch funktionsfähige Steuerventil 11 bzw. 12 ausgelöst und in die Bremsstellung beaufschlagt werden.

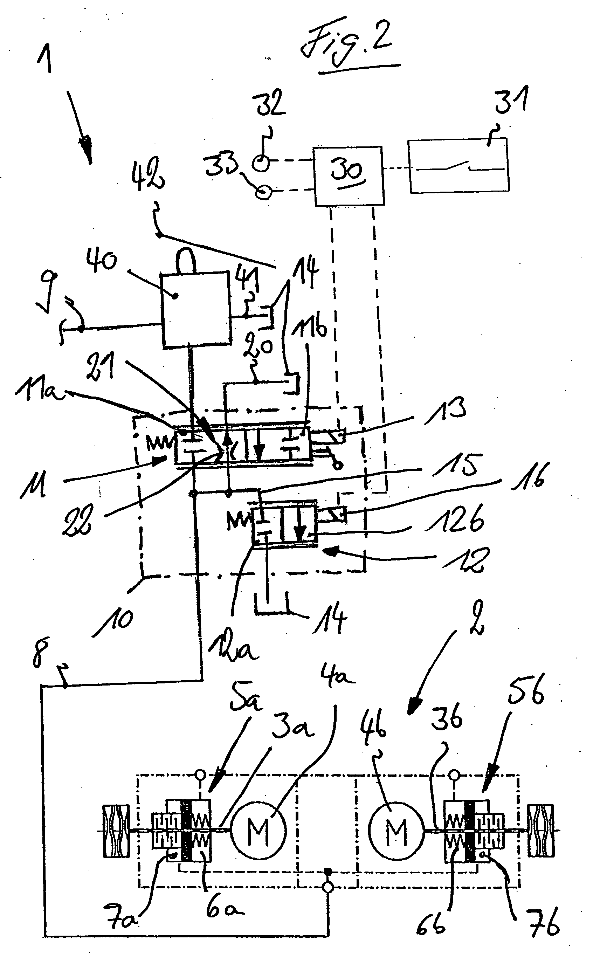

In der Figur 2 ist ein Bremssteuerungssystem 1 einer als Federspeicherbremse 2 ausgebildeten Bremseinrichtung beschrieben, die eine Betriebsbremse und eine Feststellbremse bildet und somit neben den bereits beschriebenen Funktionen zusätzlich die Funktion einer Betriebsbremse zum dosierten Abbremsen der Arbeitsmaschine aufweist. Das Bremssteuerungssystem 1 entspricht hierbei, insbesondere bezüglich des Aufbaus und der Funktion der Bremsventileinrichtung 10, dem in den Figur 1 dargestellten Aufbau.

Die Federspeicherbremse 2 ist hierbei beispielsweise als Ein-Kreis-Bremssystem ausgebildet, wobei zusätzlich zu der Figur 1 ein Bremsventil 40 stromauf des ersten Steuerventils 11 in der Bremsleitung 8 angeordnet ist. Das Bremsventil 40 kann hierbei Bestandteil der Bremsventileinrichtung 10 sein. Das Bremsventil 40 steht eingangsseitig mit der Druckversorgungsleitung 9 und ausgangsseitig mit einer zu dem Behälter 14 geführten Behälterleitung 41 sowie der zu dem ersten Steuerventil 11 geführten Bremslösedruckleitung 8 in Verbindung. Das Bremsventil 40 ist im vorliegenden Ausführungsbeispiel beispielsweise als steuerbares Proportional-Druckminderventil mit einer fallenden Kennlinie ausgebildet. Das Bremsventil 40 ist durch ein Betätigungsorgan 42, beispielsweise ein Bremspedal oder durch die Pedale einer sogenannten Doppelpedalsteuerung, bei der jeweils ein Fahr-/Bremspedal der Vorwärtsfahrtrichtung und ein Fahr-/Bremspedal der Rückwärtsfahrtrichtung zugeordnet ist, mechanisch betätigbar. Bei einer Betätigung des Betätigungsorgans 42 wird hierbei das Bremsventil 40 zunehmend in eine die Bremslösedruckleitung 8 mit der zu dem Behälter 14 geführten Behälterleitung 41 verbindenden Stellung beaufschlagt, so dass durch einen dosierten Abbau des in der Bremsleitung 8 anstehenden Bremslösedruckes die Federspeicherbremse 5a, 5b zur Erzielung eines Betriebsbremsfunktion dosiert in die Bremsstellung beaufschlagt werden kann.

Gemäß den Figuren 1 und 2 ist das zweite Steuerventil 12 als Zweistellungs-Zweianschlussventil ausgebildet und das erste Steuerventil 11 als Zweistellungs-Vieranschlussventil ausgebildet, bei dem der zweite Signalpfad von der Behälterzweigleitung 15 abzweigt.

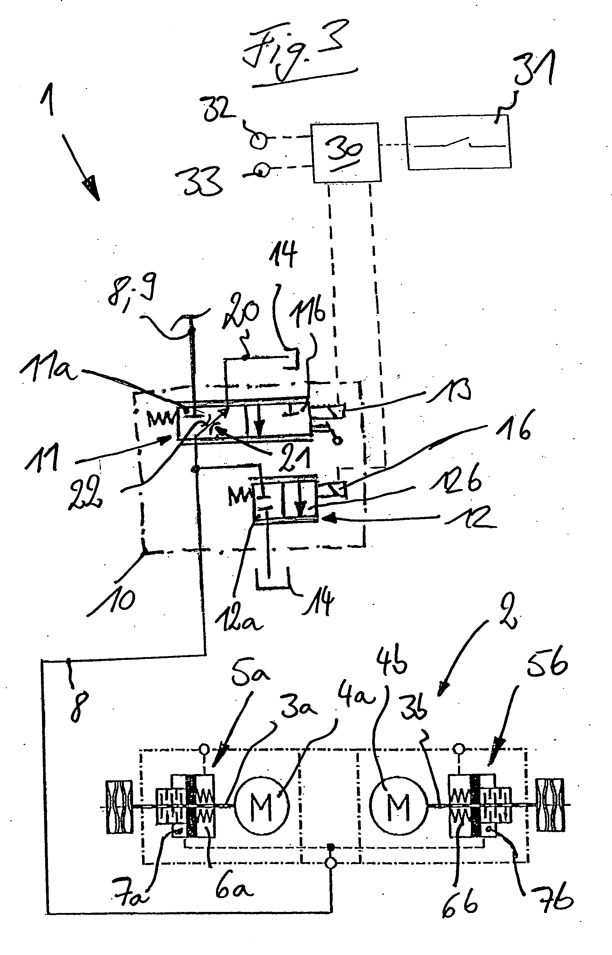

Es ist jedoch ebenfalls möglich, dass erste Steuerventil 11 gemäß der Figur 3 als Zweistellungs-Dreianschlussventil auszubilden, bei dem der zweite Signalpfad von der Bremslösedruckleitung 8 zwischen dem ersten Steuerventil 11 und dem Bremslösedruckraum 7a, 7b abzweigt und somit die zu dem Behälter 14 geführte Steuerleitung 20 in der Sperrstellung 11a des Steuerventils 11 an den Anschluss des Steuerventils 11 angeschlossen ist, der mit der zu den Bremslösedruckräumen 7a, 7b geführten Bremslösedruckleitung 8 verbunden ist.

Die beiden Steuerventile 11, 12 der erfindungsgemäßen Bremsventileinrichtung 10 können hierbei - wie in den Figuren 1 bis 3 dargestellt ist - als in Zwischenstellungen drosselnde Proportionalventile ausgebildet sein. Alternativ ist ebenfalls möglich, die beiden Steuerventile 11, 12 als Schaltventile auszugestalten.

## Patentansprüche

1. Bremssteuerungssystem einer mobilen Arbeitsmaschine, insbesondere Flurförderzeug, mit einer als Federspeicherbremse ausgebildeten Bremseinrichtung, insbesondere einer als Feststellbremse arbeitenden Bremseinrichtung, die hydraulisch mittels eines in einem Bremslösedruckraum anstehenden Bremslösedruckes in Richtung einer Lösestellung beaufschlagbar ist, wobei zur Steuerung der Bremseinrichtung dem Bremslösedruckraum eine elektrisch betätigbare Bremsventileinrichtung vorgeschaltet ist und mittels der Bremsventileinrichtung eine manuelle und/oder automatische Feststellbremsfunktion sowie eine Sicherheitsfunktion erzielbar ist, **dadurch gekennzeichnet, dass** die elektrisch betätigbare Bremsventileinrichtung (10) ein erstes, als Zweistellungsventil ausgebildetes, elektrisch betätigbares Steuerventil (11), das in einer den Bremslösedruck führenden Bremslösedruckleitung (8) angeordnet ist und eine im stromlosen Zustand wirksame Sperrstellung (11a) sowie eine elektrisch betätigbare Durchflussstellung (11b) aufweist, und ein zweites, als Zweistellungsventil ausgebildetes, elektrisch betätigbares Steuerventil (12) umfasst, das in einer von der Bremslösedruckleitung (8) zwischen dem ersten Steuerventil (11) und dem Bremslösedruckraum (7a; 7b) abzweigenden, zu einem Behälter (14) geführten Behälterzweigleitung (15) angeordnet ist und eine im stromlosen Zustand wirksame Sperrstellung (12a) sowie eine elektrisch betätigbare Durchflussstellung (12b) aufweist, wobei das erste Steuerventil (11) im stromlosen Zustand den Bremslösedruckraum (7a; 7b) mit einer Druckabbau- oder Druckhalteeinrichtung (21) oder mit dem Behälter (14) verbindet.

2. Bremssteuerungssystem nach Anspruch 1, **dadurch gekennzeichnet, dass** zur Erzielung der manuellen und/oder automatischen Feststellbremsfunktion das erste Steuerventil (11) durch eine Stromlosschaltung in die Sperrstellung (11a) beaufschlagt und das zweite Steuerventil (12) durch eine elektrische Ansteuerung in die Durchflussstellung (12b) beaufschlagt ist.

3. Bremssteuerungssystem nach Anspruch 1 oder 2, **dadurch gekennzeichnet, dass** das erste Steuerventil (11) im stromlosen Zustand die Behälterzweigleitung (15) oder die Bremslösedruckleitung (8) zwischen dem ersten Steuerventil (11) und dem Bremslösedruckraum (7a; 7b) mit der Druckabbau- oder / Druckhalteeinrichtung oder dem Behälter (14) verbindet.

4. Bremssteuerungssystem nach einem der Ansprüche 1 bis 3, **dadurch gekennzeichnet, dass** die Druckabbau- oder Druckhalteeinrichtung (21) von einer in das erste Steuerventil (11) integrierten Drosseleinrichtung (22), insbesondere einer Blende, gebildet ist und das erste Steuerventil (11) im stromlosen Zustand die Behälterzweigleitung (15) oder die Bremslösedruckleitung (8) zwischen dem ersten Steuerventil (11) und dem Bremslösedruckraum (7a; 7b) über die Drosseleinrichtung (22) mit dem Behälter (14) verbindet.

5. Bremssteuerungssystem nach einem der Ansprüche 1 bis 4, **dadurch gekennzeichnet, dass** das erste Steuerventil (11) in der Durchflussstellung (11b) die Verbindung des Bremslösedruckraumes (7a; 7b) mit dem Behälter (14) absperrt.

6. Bremssteuerungssystem nach einem der Ansprüche 1 bis 5, **dadurch gekennzeichnet, dass** zur Betätigung der elektrisch betätigbare Bremsventileinrichtung (10) eine elektronische Steuereinrichtung (30) vorgesehen ist.

7. Bremssteuerungssystem nach Anspruch 6, **dadurch gekennzeichnet, dass** die elektronische Steuereinrichtung (30) eingangsseitig mit einer Sensoreinrichtung (32; 32), insbesondere einem Geschwindigkeitssensor oder einem das Vorhandensein einer Bedienperson erfassenden Sensoreinrichtung, in Wirkverbindung steht, wobei in Abhängigkeit des Signals der Sensoreinrichtung (32; 33) die automatische Feststellbremsfunktion erzielbar ist.

8. Bremssteuerungssystem nach Anspruch 6 oder 7, **dadurch gekennzeichnet, dass** die elektronische Steuereinrichtung (30) eingangsseitig mit einem Bedienelement (31), insbesondere einem Taster oder Schalter, in Wirkverbindung steht, wobei in Abhängigkeit der Betätigung des Bedienelements (31) die manuelle Feststellbremsfunktion erzielbar ist.

9. Bremssteuerungssystem nach einem der Ansprüche 1 bis 8, **dadurch gekennzeichnet, dass** die Federspeicherbremse (5a; 5b) als Betriebsbremse arbeitet, wobei dem Bremslösedruckraum (7a; 7b) ein Bremsventil (40) zugeordnet ist.

10. Bremssteuerungssystem nach Anspruch 9, **dadurch gekennzeichnet, dass** das erste Steuerventil (11) stromab des Bremsventils (40) in der Bremslösedruckleitung (8) angeordnet ist.

## Claims

1. Brake control system of a mobile work machine, in particular industrial truck, with a braking device designed as a spring-loaded brake, in particular a braking device which operates as a parking brake, wherein the braking device is loadable hydraulically in the direction of a release position by means of a brake release pressure arising in a brake release pressure space, wherein, in order to control the braking device, an electrically actuable brake valve device is connected upstream of the brake release pressure space, and a manual and/or automatic parking brake function and a safety function are achievable by means of the brake valve device, **characterized in that** the electrically actuable brake valve device (10) has a first electrically actuable control valve (11), which is designed as a two-position valve and is arranged in a brake release pressure line (8) conducting the brake release pressure, and a blocking position (11a), which is effective in the no current state, and an electrically actuable throughflow position (11b), and comprises a second electrically actuable control valve (12), which is designed as a two-position valve and is arranged in a container branch line (15), which branches off from the brake release pressure line (8) between the first control valve (11) and the brake release pressure space (7a; 7b) and is guided to a container (14), and has a blocking position (12a), which is effective in the no current state, and an electrically actuable throughflow position (12b), wherein, in the no current state, the first control valve (11) connects the brake release pressure space (7a; 7b) to a pressure-dissipating or pressure-maintaining device (21) or to the container (14).

2. Brake control system according to Claim 1, **characterized in that**, in order to obtain the manual and/or automatic parking brake function, the first control valve (11) is loaded into the blocking position (11a) by switching to no current and the second control valve (12) is loaded into the throughflow position (12b) by electric activation.

3. Brake control system according to Claim 1 or 2, **characterized in that**, in the no current state, the first control valve (11) connects the container branch line (15) or the brake release pressure line (8) between the first control valve (11) and the brake release pressure space (7a; 7b) to the pressure-dissipating or pressure-maintaining device or to the container (14).

4. Brake control system according to one of Claims 1 to 3, **characterized in that** the pressure-dissipating or pressure-maintaining device (21) is formed by a throttle device (22) integrated into the first control valve (11), in particular an orifice, and, in the no current state, the first control valve (11) connects the container branch line (15) or the brake release pressure line (8) between the first control valve (11) and the brake release pressure space (7a; 7b) to the container (14) via the throttle device (22).

5. Brake control system according to one of Claims 1 to 4, **characterized in that**, in the throughflow position (11b), the first control valve (11) blocks off the connection of the brake release pressure space (7a; 7b) to the container (14).

6. Brake control system according to one of Claims 1 to 5, **characterized in that** an electronic control device (30) is provided in order to actuate the electrically actuable brake valve device (10).

7. Brake control system according to Claim 6, **characterized in that** the electronic control device (30) is operatively connected on the input side to a sensor device (32; 32), in particular to a speed sensor or a sensor device detecting the presence of an operator, wherein the automatic parking brake function is achievable depending on the signal from the sensor device (32; 33).

8. Brake control system according to Claim 6 or 7, **characterized in that** the electronic control device (30) is operatively connected on the input side to an operating element (31), in particular a pushbutton or switch, wherein the manual parking brake function is achievable depending on the actuation of the operating element (31).

9. Brake control system according to one of Claims 1 to 8, **characterized in that** the spring-loaded brake (5a; 5b) operates as a service brake, wherein a brake valve (40) is assigned to the brake release pressure space (7a; 7b).

10. Brake control system according to Claim 9, **characterized in that** the first control valve (11) is arranged downstream of the brake valve (40) in the brake release pressure line (8).

## Revendications

1. Système de commande de freinage d'une machine de travail mobile, notamment chariot élévateur, avec un dispositif de freinage prenant la forme d'un frein à accumulateur par ressort, notamment d'un dispositif de freinage fonctionnant comme un frein de stationnement pouvant être alimenté de façon hydraulique à l'aide d'une pression de déclenchement de frein régnant dans un espace de pression de déclenchement de frein en direction d'une position de déclenchement, sachant que pour commander le dispositif de freinage, un dispositif de soupape de frein électriquement actionnable est connecté en amont de l'espace de pression de déclenchement de frein et qu'une fonction de frein de stationnement manuel et/ou automatique ainsi qu'une fonction de sécurité peuvent être atteintes à l'aide du dispositif de soupape de frein, **caractérisé en ce que** le dispositif de soupape de frein (10) électriquement actionnable comporte une première soupape de commande (11) électriquement actionnable prenant la forme d'une soupape à deux positions et disposée dans une conduite de pression de déclenchement de frein (8) guidant la pression de déclenchement de frein et une position de verrouillage (11a) active à l'état sans débit ainsi qu'une position passante (11b) électriquement actionnable et englobe une deuxième soupape de commande (12) électriquement actionnable prenant la forme d'une soupape à deux positions, disposée dans une conduite à deux réservoirs (15) se divisant en partant de la conduite de pression de déclenchement de frein (8) entre la première soupape de commande (11) et l'espace de pression de déclenchement de frein (7a ; 7b) et guidée vers un réservoir (14) et comportant une position de verrouillage (12a) active à l'état sans débit ainsi qu'une position passante (12b) électriquement actionnable, la première soupape de commande (11) reliant à l'état sans débit l'espace de pression de déclenchement de frein (7a ; 7b) à un dispositif d'évacuation de pression ou de maintien de pression (21) ou au réservoir (14).

2. Système de commande de freinage selon la revendication 1, **caractérisé en ce que** pour atteindre la fonction de frein de stationnement manuel et/ou automatique, la première soupape de commande (11) peut être alimentée par une connexion sans débit dans la position de verrouillage (11a) et que la deuxième soupape de commande (12) est alimentée par une excitation électrique dans la position passante (12b).

3. Système de commande de freinage selon la revendication 1 ou 2, **caractérisé en ce que** la première soupape de commande (11) relie à l'état sans débit la conduite à deux réservoirs (15) ou la conduite de pression de déclenchement de frein (8), entre la première soupape de commande (11) et l'espace de pression de déclenchement de frein (7a ; 7b), au dispositif d'évacuation de pression ou de maintien de pression ou au réservoir (14).

4. Système de commande de freinage selon l'une quelconque des, revendications 1 à 3, **caractérisé en ce que** le dispositif d'évacuation de pression ou de maintien de pression (21) est formé par un dispositif d'étranglement (22) intégré dans la première soupape de commande (11), notamment un diaphragme, et que la première soupape de commande (11) relie à l'état sans débit la conduite à deux réservoirs (15) ou la conduite de pression de déclenchement de frein (8), entre la première soupape de commande (11) et l'espace de pression de déclenchement de frein (7a ; 7b) au réservoir (14), via le dispositif d'étranglement (22).

5. Système de commande de freinage selon l'une quelconque des revendications 1 à 4, **caractérisé en ce que** la première soupape de commande (11) bloque dans la position passante (11 b) la liaison de l'espace de pression de déclenchement de frein (7a ; 7b) avec le réservoir (14).

6. Système de commande de freinage selon l'une quelconque des revendications 1 à 5, **caractérisé en ce qu'**un dispositif de commande électronique (30) est prévu pour actionner le dispositif de soupape de frein (10) électriquement actionnable.

7. Système de commande de freinage selon la revendication 6, **caractérisé en ce que** le dispositif de commande électronique (30) est en liaison active du côté d'entrée avec un dispositif de détection (32 ; 32), notamment un capteur de vitesse ou un dispositif de détection détectant la présence d'une personne utilisatrice, sachant que la fonction de frein de stationnement automatique peut être atteinte en fonction du signal du dispositif de détection (32 ; 33).

8. Système de commande de freinage selon la revendication 6 ou 7, **caractérisé en ce que** le dispositif de commande électronique (30) est en liaison active du côté d'entrée avec un élément de commande (31), notamment un bouton-poussoir ou un contacteur, sachant que la fonction de frein de stationnement manuelle peut être atteinte en fonction de l'actionnement de l'élément de commande (31) die.

9. Système de commande de freinage selon l'une quelconque des revendications 1 à 8, **caractérisé en ce que** le frein à accumulateur par ressort (5a ; 5b) fonctionne comme un frein de service, une soupape de frein (40) étant associée à l'espace de pression de déclenchement de frein (7a ; 7b).

10. Système de commande de freinage selon la revendication 9, **caractérisé en ce que** la première soupape de commande (11) est disposée dans la conduite de pression de déclenchement de frein (8) en aval de la soupape de frein (40).
